(19) Europäisches Patentamt
European Patent Office
Office européen des brevets

(11) **EP 3 661 032 B1**

## (12) EUROPEAN PATENT SPECIFICATION

(45) Date of publication and mention
of the grant of the patent:
**29.12.2021 Bulletin 2021/52**

(51) Int Cl.:
*H02K 21/00* (2006.01)    *H02K 1/16* (2006.01)
*H02K 1/27* (2006.01)

(21) Application number: **19209582.6**

(22) Date of filing: **15.11.2019**

(54) **BRUSHLESS PERMANENT MAGNET ELECTRIC MOTOR FOR WASHING MACHINES**

BÜRSTENLOSER PERMANENTMAGNET-ELEKTROMOTOR FÜR WASCHMASCHINEN

MOTEUR ÉLECTRIQUE À AIMANT PERMANENT SANS BALAI POUR MACHINES À LAVER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2018 IT 201800010638**

(43) Date of publication of application:
**03.06.2020 Bulletin 2020/23**

(73) Proprietor: **Nidec Sole Motor Corporation S.r.l.
33170 Pordenone (IT)**

(72) Inventors:
• **GRAZIOTTIN, Fabio
33170 Pordenone (IT)**
• **SANTAROSSA, Roberto
33170 Pordenone (IT)**

(74) Representative: **Giugni, Valter et al
Propria S.r.l.
Via della Colonna, 35
33170 Pordenone (IT)**

(56) References cited:
**CN-A- 104 734 446      US-A1- 2003 107 290
US-A1- 2008 030 087**

**Description**

TECHNICAL FIELD OF THE INVENTION

. The present invention refers to a BPM (brushless permanent magnet) electric motor with improved magnetic circuit, which is intended to be used to rotate the drum of a washing machine.
The improvement concerns in particular the sizing of the slots of both the rotor and of the stator, in which the permanent magnets and the electric windings are respectively housed to generate the electromagnetic field.

STATE OF THE PRIOR ART

. BPM electric motors for washing machines substantially consist of a stator and a rotor, each of which is made up of a stack of magnetic laminations. The stator is provided with slots in which the windings that generate the magnetic field are inserted, while the permanent magnets are inserted in the rotor.
. Domestic-type washing machines are designed for ever higher spin speeds and therefore require motors that run at very high rotation speeds up to 15-18,000 rpm, delivering power on the order of 600-800 W.
Due to the unquestionable advantages they offer in terms of consumption and energy efficiency, BPM motors of the so-called IPM (interior permanent magnet) type, with "spoke" rotor, are preferably used
. A brushless permanent magnet motor according to the prior art is disclosed in documents US 2003/107290 A1 and CN 104 734 446 A: it comprises an interior permanent magnet rotor of spoke type consisting of a stack of magnetic laminations defining circumferentially equally spaced radial slots, open radially outside, in which permanent magnets are housed, and wherein the rotor is disposed inside the stator and the stator and the rotor are separated by a radial air-gap.

TECHNICAL PROBLEM TO BE RESOLVED

. Unfortunately, BPM motors with "spoke" rotor configuration have the drawback of excessive noise generated both directly (electromagnetic noise, bearing noise, ventilation noise, etc.) and indirectly (vibrations and resonance of the transmission and of the machine structure induced by the motor). As is easy to understand, this problem is particularly felt when the motor is applied to domestic washing machines, especially if these machines are operated at night to take advantage of any discounts in the cost of electricity.
. Moreover, the noise level of washing machines, as with all home appliances, must be declared on the energy label, which indicates the functional characteristics of the appliances. These characteristics are becoming more and more stringent on the basis of international standards that are continuously updated.
. Consequently, theoretical studies and design experiments are being developed for a better understanding of the problem and its causes, so as to define the correlation between sensitive design parameters and the electromagnetic noise of the motor at high speed.

SUMMARY OF THE INVENTION

. The present invention proposes the object of overcoming the aforementioned problem by creating a BPM motor of the "spoke" type, with improved dimensional characteristics, in particular defining the value of a parameter that allows one to design and build the motor so that the electromagnetic vibration and noise are reduced to a minimum without excessively compromising the electromagnetic efficiency of the motor itself.
. To obtain this result, the present inventors have developed a study based on "multiphysics" simulation, simultaneously evaluating the electromagnetic and vibro-acoustic aspects with FEM simulation tools, and conducting tests and validations of an experimental type with specific and targeted test plans.
. In essence, it was a question of working on the stator and rotor slots of which the presence, but especially the shape thereof, produces a local reduction of the air gap induction and thus an increase of the reluctance of the magnetic circuit with respect to the value than would be obtained if the surfaces of the stator and rotor were smooth. In magnetic calculations, to determine the dimensional characteristics of the motor (such as the geometries of the rotor slots, the stator tooth, the air gap), this effect is cumulatively considered by means of "Carter's coefficient", which is a dimensionless multiplicative coefficient, suitably modified.
. According to the invention, this coefficient has been suitably extended so that it may also be applied effectively to motors with rotors of the "spoke" type. The objective of this extension is to evaluate, by means of the aforementioned coefficient, a proper compromise between the electromagnetic noise and the electromagnetic performance of the motor. On the basis of these considerations, an optimal value of this coefficient between 1.40 and 1.50 was determined.
. The predefined object is achieved with a motor according to the invention, the technical characteristics of which are defined in the claims of the present patent.

BRIEF DESCRIPTION OF THE FIGURES

. The characteristics and advantages of the motor, according to the present invention, will become more evident in the following description given by way of non-limiting example with reference to the accompanying figures wherein:

- Fig. 1 is a partial schematic view of a stator for a BPM motor, according to the invention,
- Fig. 2 is a partial schematic view of a closed slot rotor for a BPM motor, according to the invention,
- Fig. 3 is a partial schematic view of an open slot rotor for a BPM motor, according to the invention,
- Fig. 4 and Fig. 5 are schematic views, respectively, of an open slot rotor and a stator for a BPM electric motor with indication of the sizing thereof based on the coefficient modified according to the invention.

DETAILED DESCRIPTION OF THE INVENTION

. The study developed by the present inventors starts from the following considerations. The electromagnetic forcing in a BPM motor manifests itself mainly at a frequency f1 equal to the order multiple "p" (p = number of poles) of the rotation speeds "n" (in Hz) of the motor, according to the formula:

$$f1 = n * p$$

. However, it is known that this forcing is not perfectly sinusoidal, in particular for the configuration of a IPM (Interior Permanent Magnet) motor, and contains "distortions" that manifest themselves as non-negligible components of the forcing at higher frequencies. These frequency forcings are due to the composition of the harmonics present in the spectrum of the air gap induction and therefore of the magnetic pressure connected thereto, according to the formula:

$$fi = i * f1$$

where: i = 2, 3, 4, .........

. It is also well known that, as a result of some "non-linearity" still present in the system (for example, due to "saturation" conditions of some portions of the magnetic lamination, the static or dynamic eccentricity of the rotor 12 with respect to the stator 10, etc.), components of the forcing may be generated even at order frequencies

$$fx = x * n$$

where: x = 1, 2, 3, ...

The latter components are normally neglected in the current design for small motors used in the household appliance sector; however, they can be responsible for sensitive noise and vibrations when the motor works under load at high speed and these components fall into frequency bands that are particularly annoying to the human ear, and thus it is virtually impossible to guarantee the absolute absence of resonance conditions in the structure of the washing group and the washing machine itself.

. The present invention consists in the definition of a dimensionless parameter to be used for the sizing of the motor components in order to minimize the vibrations and the electromagnetic noise of the motor itself on the basis of the calculation considerations previously stated. In particular, the sizing concerns the geometries of the rotor slots, the stator tooth, and the air gap.

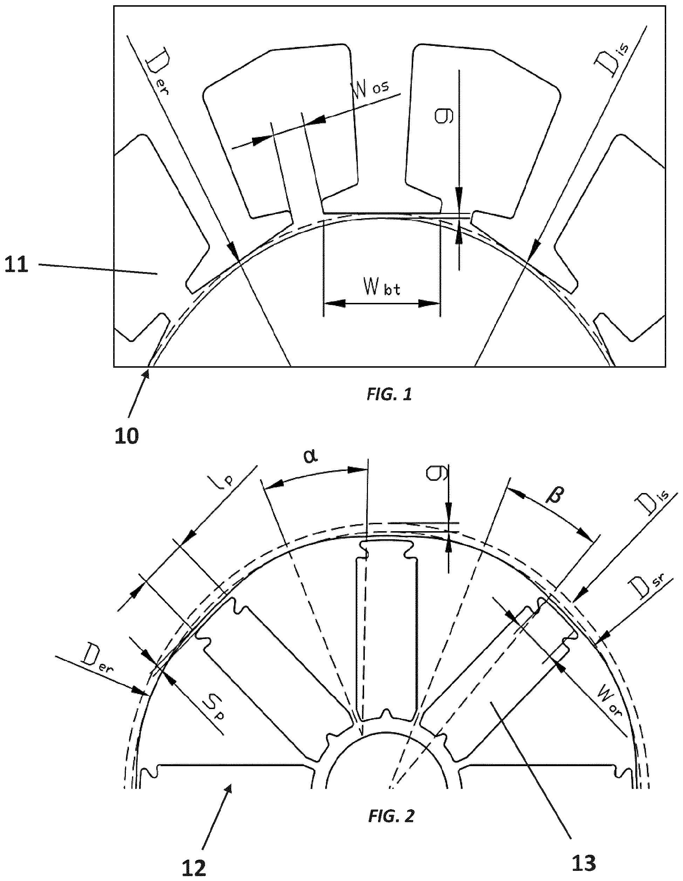

. As is known, in an electric motor, the presence of the slots 11 of the stator 10 and the slots 13 of the rotor 12 (Fig. 1 and Fig. 2) produces a local reduction in the air gap induction and therefore an increase in the reluctance of the magnetic circuit of the motor with respect to the value that would be obtained if the stator and rotor surfaces were smooth. In the calculations of the magnetic circuit, this effect is taken into account by means of a multiplicative coefficient (Carter's coefficient) to be applied to the geometric length of the air gap for designing high efficiency BPM motors. One may refer, for example, to patent documents JPS5561250 and JPH04105530. Normally, this coefficient varies between 1.20 and 1.35.

. According to the present invention, the identified parameter is defined as $"K_{cm}"$ and is calculated as the product of two coefficients: $"K_{cms}"$ (Carter's coefficient modified for the stator) and $"K_{cmr}"$ (Carter's coefficient modified for the rotor), defined by means of a special processing of the original "Carter's coefficient".

. In particular, the following formulas apply:

- With reference to Fig. 1, which shows a partial schematic view of a stator 10 with slots 11 for a BPM motor, according to the invention:

$$p_s = \frac{\pi(D_{er} + D_{is})}{2Q} \rightarrow Step\ of\ the\ stator\ slot \qquad g = \frac{(D_{is} - D_{er})}{2} \rightarrow Width\ of\ nominal\ gap$$

$$K_{ss} = 1 + \frac{1}{8g}\sqrt{w_{bt}^2 - \left(\frac{\pi D_{is}}{Q} - w_{os}\right)^2} \rightarrow Coefficient\ of\ stator\ shaping$$

$$K_{cms} = \frac{p_s}{p_s + gK_{ss} - \frac{3}{4}w_{os}} \rightarrow Modified\ Carter's\ coefficient\ for\ the\ stator$$

wherein:

$D_{er}$ is the outer diameter of the rotor,
$D_{is}$ is the inner diameter of the stator,
$Q$ is the number of stator slots,
$W_{bt}$ is the width of the tooth lip,
$W_{os}$ is the opening of the stator slot,

- With reference to Fig. 2, which shows a partial schematic view of a stator 12 and closed slots 13 for the BPM motor, according to the invention:

$$p_r = \frac{\pi(D_{er} + D_{is})}{2p} \rightarrow Step\ of\ the\ rotor\ slot \qquad g = \frac{(D_{is} - D_{er})}{2} \rightarrow Width\ of\ nominal\ gap$$

$$K_{rs} \rightarrow \left(1 + \frac{1}{8g}\sqrt{\left(D_{sr}\sin\frac{\alpha}{2}\right)^2 - \left(D_{er}\sin\frac{\beta}{2}\right)^2}\right)\left(\frac{1+2s_p+l_p}{1+l_p}\right) \rightarrow Coefficient\ of\ rotor\ shaping$$

$$K_{cmr} = \frac{p_r}{p_r + gK_{rs} - \frac{3}{4}w_{or}} \rightarrow Modified\ Carter's\ coefficient\ for\ the\ rotor$$

wherein:

$p$ is the number of poles
$D_{sr}$ is the diameter of the shaping of the rotor pole
$\alpha$ is the half-angle of the shaping of the rotor pole
$\beta$ is the half-angle of the rotor pole
$s_p$ is the thickness of the bridge
$l_p$ is the length of the bridge
$w_{or}$ is the opening of the rotor slot

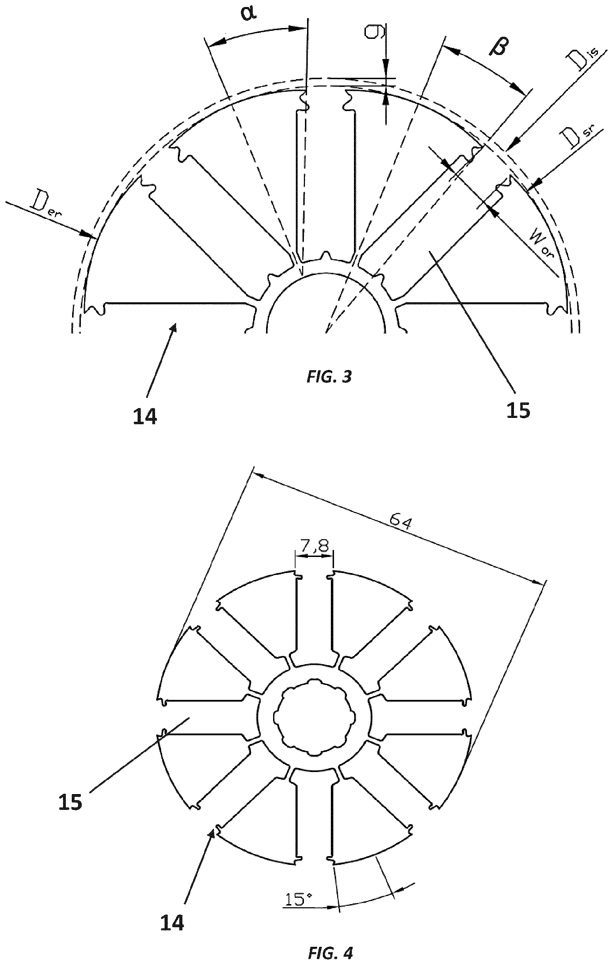

- With reference to Fig. 3, which shows a partial schematic view of a rotor 14 and open slots 15 for the BPM motor, according to the invention:

$$p_r = \frac{\pi(D_{er} + D_{is})}{2p} \rightarrow \textit{Step of the rotor slot} \qquad g = \frac{(D_{is} - D_{er})}{2} \rightarrow \textit{Width of nominal gap}$$

$$K_{rs} \rightarrow \left(1 + \frac{1}{8g}\sqrt{\left(D_{sr}\sin\frac{\alpha}{2}\right)^2 - \left(D_{er}\sin\frac{\beta}{2}\right)^2}\right) \rightarrow \textit{Coefficient of rotor}$$

$$K_{cmr} = \frac{p_r}{p_r + gK_{rs} - \frac{3}{4}w_{or}} \rightarrow \textit{Modified Carter's coefficient for the rotor}$$

. As a result, the dimensionless parameter Kcm is:

$$K_{cm} = K_{cms} * K_{cmr}$$

and, according to the present invention, the value considered optimal for sizing the motor for the purposes of containing electromagnetic noise is between 1.40 and 1.50, without compromising the electromagnetic efficiency.

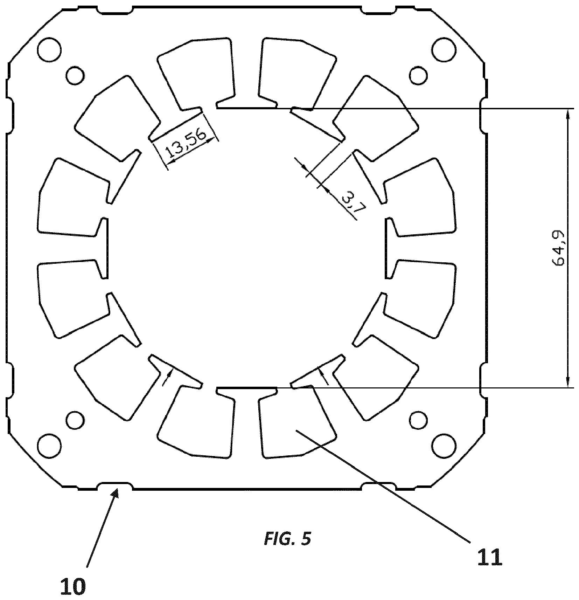

. By way of example, with reference to Fig. 4 and Fig. 5, a rotor 14 with open slots 15 and a related stator 10 for a BPM motor for a washing machine are respectively represented schematically. Based on the dimensions indicated in the figures, the resulting parameters according to the invention, using the calculation formulas indicated above, have the following values:

$$K_{cms} \approx 1.13$$

$$K_{cmr} \approx 1.27$$

$$K_{cm} \approx 1.44$$

In this case, the sizing of the constructive elements of the motor has resulted in an average reduction of 10% in the noise level of the same motor, in particular on the order i=2, defined with the formulation stated above, relative to the corresponding value set by a motor sized according to the standards previously in use.

The optimal geometric configuration for the dimensions of the rotor 14 and the stator 10 is therefore that shown in Fig. 4 and Fig. 5.

. This result has allowed the "filtering" effect of the harmonics in the air gap and the reluctance of the motor to be increased, without compromising the efficiency of the motor. The most sensitive harmonics are those of order "i = 2, 3, ......." and all those related to the saturation of the magnetic circuit.

In conclusion, the technical problem of reducing motor noise by sizing the rotor and stator on the basis of a suitably modified dimensionless coefficient (Carter's coefficient) has been resolved.

## Claims

1.  A BPM electric motor for washing machines, comprising:

> - a stator (10), consisting of a stack of magnetic laminations defining radial slots (11), equally spaced circumferentially through tooth lips, in which the windings which generate a magnetic field are housed, and
> - an interior permanent magnet rotor (14) of the "spoke" type, consisting of a stack of magnetic laminations defining radial slots (15) open radially outside, equally spaced circumferentially, in which the permanent magnets are inserted,
> - said rotor (14) being disposed inside said stator (10), said stator (10) and said rotor (14) being separated by an air-gap (g),

> **characterized in that**
> the dimensional characteristics of the rotor slots (15), of the tooth lips of the stator (10) and the air gap (g) are calculated on the basis of a dimensionless parameter $K_{cm}$ resulting from a modified Carter's coefficient $K_{cm}$ according to the following formula:

$$K_{cm} = K_{cms} * K_{cmr}$$

wherein:

$K_{cms}$ is a modified Carter's coefficient for the stator, and
$K_{cmr}$ is a modified Carter's coefficient for the rotor,

and wherein, to calculate said coefficients, the following formulas are applied:

$$p_s = \frac{\pi(D_{er} + D_{is})}{2Q} \rightarrow Step\ of\ the\ stator\ slot\alpha \qquad g = \frac{(D_{is} - D_{er})}{2} \rightarrow Width\ of\ nominal\ gap$$

$$K_{ss} = 1 + \frac{1}{8g}\sqrt{w_{bt}^2 - \left(\frac{\pi D_{is}}{Q} - w_{os}\right)^2} \rightarrow Coefficient\ of\ stator\ shaping$$

$$K_{cms} = \frac{p_s}{p_s + gK_{ss} - \frac{3}{4}w_{os}} \rightarrow Modified\ Carter's\ coefficient\ for\ the\ stator$$

wherein:

$D_{er}$ is the outer diameter of the rotor,
$D_{is}$ is the inner diameter of the stator,
Q is the number of stator slots,
$W_{bt}$ is the width of the tooth lip,
$w_{os}$ is the opening of the stator slot,

and:

$$p_r = \frac{\pi(D_{er} + D_{is})}{2p} \rightarrow Step\ of\ the\ rotor\ slot \qquad g = \frac{(D_{is} - D_{er})}{2} \rightarrow Width\ of\ nominal\ gap$$

$$K_{rs} \rightarrow \left(1 + \frac{1}{8g}\sqrt{\left(D_{sr}\sin\frac{\alpha}{2}\right)^2 - \left(D_{er}\sin\frac{\beta}{2}\right)^2}\right) \rightarrow Coefficient\ of\ rotor\ shaping$$

$$K_{cmr} = \frac{p_r}{p_r + gK_{rs} - \frac{3}{4}w_{or}} \rightarrow Modified\ Carter's\ coefficient\ for\ the\ rotor$$

wherein:

$p$ is the number of poles,
$D_{sr}$ is the diameter of the shaping of the rotor pole,
$\alpha$ is the half-angle of the shaping of the rotor pole,
$\beta$ is the half-angle of the rotor pole,
$w_{or}$ is the opening of the rotor slot.

2. A BPM electric motor for washing machines, comprising:

- a stator (10), consisting of a stack of magnetic laminations defining radial slots (11), equally spaced circumferentially through tooth lips, in which the windings which generate a magnetic field are housed, and
- an interior permanent magnet rotor (12) of the "spoke" type, consisting of a stack of magnetic laminations defining slots (13) equally spaced circumferentially and radially closed with bridges, in which the permanent magnets are inserted,
- said rotor (12) being disposed inside said stator (10), said stator (10) and said rotor (12) being separated by an air-gap (g),

**characterized in that**
the dimensional characteristics of the rotor slots (13), of the tooth lips of the stator (10) and the air gap (g) are calculated on the basis of a dimensionless parameter $K_{cm}$ resulting from a modified Carter's coefficient $K_{cm}$ according to the following formula:

$$K_{cm} = K_{cms} \, {}^{*} \, K_{cmr}$$

wherein:

$K_{cms}$ is a modified Carter's coefficient for the stator, and
$K_{cmr}$ is a modified Carter's coefficient for the rotor,

and wherein, to calculate said coefficients, the following formulas are applied:

$$p_s = \frac{\pi(D_{er} + D_{is})}{2Q} \rightarrow Step \ of \ the \ stator \ slot \qquad g = \frac{(D_{is} - D_{er})}{2} \rightarrow Width \ of \ nominal \ gap$$

$$K_{ss} = 1 + \frac{1}{8g}\sqrt{w_{bt}^2 - \left(\frac{\pi D_{is}}{Q} - w_{os}\right)^2} \rightarrow Coefficient \ of \ stator \ shaping$$

$$K_{cms} = \frac{p_s}{p_s + gK_{ss} - \frac{3}{4}w_{os}} \rightarrow Modified \ Carter's \ coefficient \ for \ the \ stator$$

wherein:

$D_{er}$ is the outer diameter of the rotor,
$D_{is}$ is the inner diameter of the stator,
Q is the number of stator slots,
$W_{bt}$ is the width of the tooth lip,
$w_{os}$ is the opening of the stator slot,

and:

$$p_r = \frac{\pi(D_{er} + D_{is})}{2p} \rightarrow Step \ of \ the \ rotor \ slot \qquad g = \frac{(D_{is} - D_{er})}{2} \rightarrow Width \ of \ nominal \ gap$$

$$K_{rs} \rightarrow \left(1 + \frac{1}{8g}\sqrt{\left(D_{sr}\sin\frac{\alpha}{2}\right)^2 - \left(D_{er}\sin\frac{\beta}{2}\right)^2}\right)\left(\frac{1+2s_p+l_p}{1+l_p}\right) \rightarrow Coefficient \ of \ rotor \ shaping$$

$$K_{cmr} = \frac{p_r}{p_r + gK_{rs} - \frac{3}{4}w_{or}} \rightarrow Modified \ Carter's \ coefficient \ for \ the \ rotor$$

wherein:

$p$ is the number of poles,
$D_{sr}$ is the diameter of the shaping of the rotor pole,
$\alpha$ is the half-angle of the shaping of the rotor pole,

$\beta$ is the half-angle of the rotor pole,
$S_p$ is the thickness of the bridge,
$I_p$ is the length of the bridge,
$W_{or}$ is the opening of the rotor slot.

3. A BPM electric motor for washing machines, according to claim 1 or 2, wherein the dimensionless parameter $K_{cm}$ has a value between 1.40 and 1.50.

4. A BPM electric motor for washing machines, according to claim 1 or 2, wherein the dimensionless parameter $K_{cm}$ has a value of 1.435.

5. A washing machine with a BPM electric motor as in any of the previous claims.

**Patentansprüche**

1. Ein BPM-Elektromotor für Waschmaschinen, umfassend:

   - einen Stator (10), bestehend aus einem Stapel magnetischer Lamellen, die radiale Schlitze (11) definieren, die in gleichem Umfangsabstand durch Zahnlippen verlaufen, in denen die ein Magnetfeld erzeugenden Wicklungen untergebracht sind, und
   - einen Interior-Permanentmagnet-Rotor (14) vom "Speichen"-Typ, bestehend aus einem Stapel magnetischer Lamellen, die radiale Schlitze (15) definieren, die radial außen, in gleichem Umfangsabstand, offen sind, in die die Permanentmagnete eingesetzt sind,
   - wobei der Rotor (14) im Inneren des Stators (10) angeordnet ist, wobei der Stator (10) und der Rotor (14) durch einen Luftspalt (g) getrennt sind,

   **dadurch gekennzeichnet, dass**,
   die Abmessungseigenschaften der Rotorschlitze (15), der Zahnlippen des Stators (10) und des Luftspalts (g) auf der Grundlage eines dimensionslosen Parameters $K_{cm}$ berechnet werden, der sich aus einem modifizierten Carter-Koeffizienten $K_{cm}$ nach der folgenden Formel ergibt:

   $$K_{cm} = K_{cms} * K_{cmr}$$

   wobei:

   $K_{cms}$ ein modifizierter Carter-Koeffizient für den Stator ist, und
   $K_{cmr}$ ein modifizierter Carter-Koeffizient für den Rotor ist,

   und wobei zur Berechnung dieser Koeffizienten die folgenden Formeln angewendet werden:

   $$p_s = \frac{\pi(D_{er} + D_{is})}{2Q} \rightarrow \; \textit{Schritt des Statorschlitzes} \qquad g = \frac{(D_{is} - D_{er})}{2} \rightarrow \; \textit{Breite des Nennspalts}$$

   $$K_{ss} = 1 + \frac{1}{8g} \sqrt{w_{bt}^2 - \left(\frac{\pi D_{is}}{Q} - w_{os}\right)^2} \rightarrow \; \textit{Koeffizient der Statorformung}$$

   $$K_{cms} = \frac{p_s}{p_s + gK_{ss} - \frac{3}{4}w_{os}} \rightarrow \; \textit{modifizierter Carter-Koeffizient für den Stator}$$

wobei:

$D_{er}$ der Außendurchmesser des Rotors ist,
$D_{is}$ der Innendurchmesser des Stators ist,
$Q$ die Anzahl der Statorschlitze ist,
$W_{bt}$ die Breite der Zahnlippe ist,
$W_{os}$ die Öffnung des Statorschlitzes ist,

und:

$$p_r = \frac{\pi(D_{er} + D_{is})}{2p} \rightarrow \textit{Schritt des Statorschlitzes} \qquad g = \frac{(D_{is} - D_{er})}{2} \rightarrow \quad \textit{Breite des Nennspalts}$$

$$K_{rs} \rightarrow \left( 1 + \frac{1}{8g} \sqrt{\left(D_{sr} \sin\frac{\alpha}{2}\right)^2 - \left(D_{er} \sin\frac{\beta}{2}\right)^2} \right) \rightarrow \quad \textit{Koeffizient der Statorformung}$$

$$K_{cmr} = \frac{p_r}{p_r + g K_{rs} - \frac{3}{4} w_{or}} \rightarrow \quad \textit{modifizierter Carter-Koeffizient für den Stator}$$

wobei:

$p$ die Anzahl der Pole ist,
$D_{sr}$ der Durchmesser der Formgebung des Rotorpols ist,
$\alpha$ der Halbwinkel der Formgebung des Rotorpols ist,
$\beta$ der Halbwinkel des Rotorpols ist,
$W_{or}$ die Öffnung des Rotorschlitzes ist.

2. Ein BPM-Elektromotor für Waschmaschinen, umfassend:

- einen Stator (10), bestehend aus einem Stapel magnetischer Lamellen, die radiale Schlitze (11) definieren, die in gleichem Umfangsabstand durch Zahnlippen verlaufen, in denen die ein Magnetfeld erzeugenden Wicklungen untergebracht sind, und
- einen Interior-Permanentmagnet-Rotor (12) vom "Speichen"-Typ, bestehend aus einem Stapel magnetischer Lamellen, die Schlitze (15) definieren, die in gleichem Abstand umlaufend und radial mit Brücken verschlossen sind, in die die Permanentmagnete eingesetzt sind,
- wobei der Rotor (12) im Inneren dieses Stators (10) angeordnet ist, wobei der Stator (10) und der Rotor (12, 14) durch einen Luftspalt (g) getrennt sind,

**dadurch gekennzeichnet, dass**,
die Abmessungseigenschaften der Rotorschlitze (15), der Zahnlippen des Stators (10) und des Luftspalts (g) auf der Grundlage eines dimensionslosen Parameters $K_{cm}$ berechnet werden, der sich aus einem modifizierten Carter-Koeffizienten $K_{cm}$ nach der folgenden Formel ergibt:

$$K_{cm} = K_{cms} * K_{cmr}$$

wobei:

$K_{cms}$ ist ein modifizierter Carter-Koeffizient für den Stator ist, und
$K_{cmr}$ ein modifizierter Carter-Koeffizient für den Rotor ist,

und wobei zur Berechnung dieser Koeffizienten die folgenden Formeln angewendet werden:

$$p_s = \frac{\pi(D_{er} + D_{is})}{2Q} \rightarrow \textit{Schritt des Statorschlitzes} \qquad g = \frac{(D_{is} - D_{er})}{2} \rightarrow \textit{Breite des Nennspalts}$$

$$K_{ss} = 1 + \frac{1}{8g}\sqrt{w_{bt}^2 - \left(\frac{\pi D_{is}}{Q} - w_{os}\right)^2} \rightarrow \textit{Koeffizient der Statorformung}$$

$$K_{cms} = \frac{p_s}{p_s + gK_{ss} - \frac{3}{4}w_{os}} \rightarrow \textit{modifizierter Carter-Koeffizient für den Stator}$$

wobei:

$D_{er}$ der Außendurchmesser des Rotors ist,
$D_{is}$ der Innendurchmesser des Stators ist,
$Q$ die Anzahl der Statorschlitze ist,
$W_{bt}$ die Breite der Zahnlippe ist,
$W_{os}$ die Öffnung des Statorschlitzes ist,

und:

$$p_r = \frac{\pi(D_{er} + D_{is})}{2p} \rightarrow \textit{Schritt des Statorschlitzes} \qquad g = \frac{(D_{is} - D_{er})}{2} \rightarrow \textit{Breite des Nennspalts}$$

$$K_{rs} \rightarrow \left(1 + \frac{1}{8g}\sqrt{\left(D_{sr}\sin\frac{\alpha}{2}\right)^2 - \left(D_{er}\sin\frac{\beta}{2}\right)^2}\right) \rightarrow \textit{Koeffizient der Statorformung}$$

$$K_{cmr} = \frac{p_r}{p_r + gK_{rs} - \frac{3}{4}w_{or}} \rightarrow \textit{modifizierter Carter-Koeffizient für den Stator}$$

wobei:

$p$ die Anzahl der Pole ist,
$D_{sr}$ der Durchmesser der Formgebung des Rotorpols ist,
$\alpha$ der Halbwinkel der Formgebung des Rotorpols ist,
$\beta$ der Halbwinkel des Rotorpols ist,
$W_{or}$ die Öffnung des Rotorschlitzes ist.

3. Ein BPM-Elektromotor für Waschmaschinen nach Anspruch 1 oder 2, wobei der dimensionslose Parameter $K_{cm}$ einen Wert zwischen 1,40 und 1,50 hat.

4. Ein BPM-Elektromotor für Waschmaschinen nach Anspruch 1 oder 2, bei dem der dimensionslose Parameter $K_{cm}$ einen Wert von 1,435 hat.

5. Eine Waschmaschine mit einem BPM-Elektromotor vom "Speichen"-Typs nach einem der vorhergehenden Ansprüche.

**Revendications**

1. Moteur électrique BPM pour machines à laver, comprenant :

- un stator (10), constitué d'un empilement de tôles magnétiques définissant des fentes (11) radiales, espacées de manière égale circonférentiellement à travers des lèvres de dent, dans lesquelles sont logés les enroulements qui génèrent un champ magnétique, et
- un rotor (14) intérieur à aimants permanents du type "à rayons", constitué d'un empilement de tôles magnétiques définissant des fentes (15) radiales ouvertes radialement vers l'extérieur, espacées de manière égale circonférentiellement, dans lesquelles sont insérés les aimants permanents,
- ledit rotor (14) étant disposé à l'intérieur dudit stator (10), ledit stator (10) et ledit rotor (14) étant séparés par un entrefer (g),

**caractérisé en ce que**

les caractéristiques dimensionnelles des fentes du rotor (15), des lèvres de dent du stator (10) et de l'entrefer (g) sont calculées sur la base d'un paramètre sans dimension $K_{cm}$ résultant d'un coefficient de Carter modifié $K_{cm}$ selon la formule suivante :

$$K_{cm} = K_{cms} * K_{cmr}$$

dans laquelle :

$K_{cms}$ est un coefficient de Carter modifié pour le stator, et
$K_{cmr}$ est un coefficient de Carter modifié pour le rotor,
et dans laquelle, pour calculer lesdits coefficients, les formules suivantes sont appliquées :

$$p_s = \frac{\pi(D_{er} + D_{is})}{2Q} \rightarrow \text{Pas de fente du stator} \qquad g = \frac{(D_{is} - D_{er})}{2} \rightarrow \text{Largeur de l'écart nominal}$$

$$K_{ss} = 1 + \frac{1}{8g}\sqrt{w_{bt}^2 - \left(\frac{\pi D_{is}}{Q} - w_{os}\right)^2} \rightarrow \text{Coefficient de mise en forme du stator}$$

$$K_{cms} = \frac{p_s}{p_s + gK_{ss} - \frac{3}{4}w_{os}} \rightarrow \text{Coefficient de Carter modifié pour le stator}$$

dans lesquelles :

$D_{er}$ est le diamètre extérieur du rotor,
$Dis$ est le diamètre intérieur du stator,
$Q$ est le nombre de fentes du stator,
$W_{bt}$ est la largeur de la lèvre de dent,
$W_{os}$ est l'ouverture de la fente du stator,

et :

$$p_r = \frac{\pi(D_{er} + D_{is})}{2p} \rightarrow \text{Pas de fente du rotor} \qquad g = \frac{(D_{is} - D_{er})}{2} \rightarrow \text{Largeur de l'écart nominal}$$

$$K_{rs} \rightarrow \left(1 + \frac{1}{8g}\sqrt{\left(D_{sr}\sin\frac{\alpha}{2}\right)^2 - \left(D_{er}\sin\frac{\beta}{2}\right)^2}\right) \rightarrow \text{Coefficient de mise en forme du rotor}$$

$$K_{cmr} = \frac{p_r}{p_r + gK_{rs} - \frac{3}{4}w_{or}} \rightarrow \text{Coefficient de Carter modifié pour le rotor}$$

dans lesquelles :

$p$ est le nombre de pôles,
$D_{sr}$ est le diamètre de mise en forme du pôle du rotor,
$\alpha$ est le demi-angle de mise en forme du pôle du rotor,
$\beta$ est le demi-angle du pôle du rotor,
$W_{or}$ est l'ouverture de fente du rotor.

2. Moteur électrique BPM pour machines à laver, comprenant :

- un stator (10), constitué d'un empilement de tôles magnétiques définissant des fentes (11) radiales, espacées de manière égale circonférentiellement à travers des lèvres de dent, dans lesquelles sont logés les enroulements qui génèrent un champ magnétique, et
- un rotor (12) intérieur à aimants permanents du type "à rayons", constitué d'un empilement de tôles magnétiques définissant des fentes (13), espacées de manière égale circonférentiellement et radialement fermés par des ponts, dans lesquelles sont insérés les aimants permanents,
- ledit rotor (12) étant disposé à l'intérieur dudit stator (10), ledit stator (10) et ledit rotor (12) étant séparés par un entrefer (g),

**caractérisé en ce que**
les caractéristiques dimensionnelles des fentes du rotor (13), des lèvres de dent du stator (10) et de l'entrefer (g) sont calculées sur la base d'un paramètre sans dimension $K_{cm}$ résultant d'un coefficient de Carter modifié $K_{cm}$ selon la formule suivante :

$$K_{cm} = K_{cms} * K_{cmr}$$

dans laquelle :

$K_{cms}$ est un coefficient de Carter modifié pour le stator, et
$K_{cmr}$ est un coefficient de Carter modifié pour le rotor,
et dans laquelle, pour calculer lesdits coefficients, les formules suivantes sont appliquées :

$$p_s = \frac{\pi(D_{er} + D_{is})}{2Q} \rightarrow \text{Pas de fente du stator} \qquad g = \frac{(D_{is} - D_{er})}{2} \rightarrow \text{Largeur de l'écart nominal}$$

$$K_{ss} = 1 + \frac{1}{8g}\sqrt{w_{bt}^2 - \left(\frac{\pi D_{is}}{Q} - w_{os}\right)^2} \rightarrow \text{Coefficient de mise en forme du stator}$$

$$K_{cms} = \frac{p_s}{p_s + gK_{ss} - \frac{3}{4}w_{os}} \rightarrow \text{Coefficient de Carter modifié pour le stator}$$

dans lesquelles :

$D_{er}$ est le diamètre extérieur du rotor,
*Dis* est le diamètre intérieur du stator,
*Q* est le nombre de fentes du stator,
$W_{bt}$ est la largeur de la lèvre de la dent,
$W_{os}$ est l'ouverture de la fente du stator,

et :

$$p_r = \frac{\pi(D_{er} + D_{is})}{2p} \quad \rightarrow \quad \text{Pas de fente du rotor} \qquad g = \frac{(D_{is} - D_{er})}{2} \quad \rightarrow \quad \text{Largeur de l'écart nominal}$$

$$K_{rs} \rightarrow \left(1 + \frac{1}{8g}\sqrt{\left(D_{sr}\sin\frac{\alpha}{2}\right)^2 - \left(D_{er}\sin\frac{\beta}{2}\right)^2}\right)\left(\frac{1+2s_p+l_p}{1+l_p}\right) \rightarrow \text{Coefficient de mise en forme du rotor}$$

$$K_{cmr} = \frac{p_r}{p_r + gK_{rs} - \frac{3}{4}w_{or}} \quad \rightarrow \quad \text{Coefficient de Carter modifié pour le rotor}$$

dans lesquelles :

*p* est le nombre de pôles
$D_{sr}$ est le diamètre de mise en forme du pôle du rotor
$\alpha$ est le demi-angle de mise en forme du pôle du rotor
$\beta$ est le demi-angle du pôle du rotor
$S_p$ est l'épaisseur du pont
$l_p$ est la longueur du pont
$W_{or}$ est l'ouverture de la fente du rotor.

3. Moteur électrique BPM pour machines à laver, selon la revendication 1 ou 2, dans lequel le paramètre sans dimension $K_{cm}$ a une valeur comprise entre 1,40 et 1,50.

4. Moteur électrique BPM pour machines à laver, selon la revendication 1 ou 2, dans lequel le paramètre sans dimension $K_{cm}$ a une valeur de 1,435.

5. Machine à laver avec un moteur électrique BPM du type "à rayons" selon l'une quelconque des revendications précédentes.

*FIG. 1*

*FIG. 2*

FIG. 3

14

15

15

14

FIG. 4

13,56

3,7

64,9

*FIG. 5*

10

11

**REFERENCES CITED IN THE DESCRIPTION**

**Patent documents cited in the description**

- US 2003107290 A1
- CN 104734446 A
- JP S5561250 B
- JP H04105530 B